(19) Europäisches Patentamt
European Patent Office
Office européen des brevets

(11) Veröffentlichungsnummer: **0 091 166**
**B1**

(12) # EUROPÄISCHE PATENTSCHRIFT

(45) Veröffentlichungstag der Patentschrift: **29.10.86**

(21) Anmeldenummer: **83200460.0**

(22) Anmeldetag: **31.03.83**

(51) Int. Cl.[4]: **C 23 F 11/12,** C 23 F 11/14, C 23 F 11/16, C 23 F 11/167, C 23 C 22/07, B 05 D 7/16, C 09 D 3/74, C 09 D 5/08

(54) **Verfahren zum Behandeln von Metalloberflächen.**

(30) Priorität: **07.04.82 US 366449**

(43) Veröffentlichungstag der Anmeldung: **12.10.83 Patentblatt 83/41**

(45) Bekanntmachung des Hinweises auf die Patenterteilung: **29.10.86 Patentblatt 86/44**

(84) Benannte Vertragsstaaten: **AT BE CH DE FR IT LI NL SE**

(56) Entgegenhaltungen:
**DE - A - 3 146 265**
**US - A - 3 462 319**
**US - A - 4 202 805**
**US - A - 4 263 167**
**US - A - 4 290 912**
**US - A - 4 376 000**

(73) Patentinhaber: **METALLGESELLSCHAFT AG, Reuterweg 14 Postfach 3724, D-6000 Frankfurt/M.1 (DE)**
(84) Benannte Vertragsstaaten: **CH DE IT LI NL SE AT**

(73) Patentinhaber: **Société Continentale Parker, 51, Rue Pierre, F-92111 Clichy (FR)**
(84) Benannte Vertragsstaaten: **BE CH FR IT LI SE**

(72) Erfinder: **Lindert, Andreas, 5409 Patterson drive, Troy Michigan (US)**

(74) Vertreter: **Rieger, Harald, Dr., Reuterweg 14, D-6000 Frankfurt a.M. (DE)**

EP 0 091 166 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Behandeln von gegebenenfalls mit einem chemischen Umwandlungsüberzug versehenen Metalloberflächen mittels einer organisches Polymer enthaltenden wässrigen Lösung oder Dispersion sowie die Anwendung des Verfahrens auf die Nachbehandlung von mit einem Phosphatüberzug versehenen Metalloberflächen.

Es ist bekannt, auf Metalloberflächen Schutzüberzüge aufzubringen, um die Korrosionsbeständigkeit und die Haftung eines nachfolgend aufgetragenen Lackes zu verbessern. Hierzu werden üblicherweise die Metalloberflächen mit Lösungen in Berührung gebracht, die einen Phosphatüberzug und/oder Metalloxidüberzug ausbilden. Schutzüberzüge mit ähnlicher Wirkung können auch mit Lösungen auf Basis Oxalationen, Chromationen und dergl. erzeugt werden.

Die Erzeugung der sogenannten Umwandlungsüberzüge geschieht im allgemeinen nach dem Verfahrensschema

Reinigung,
Wasserspülung,
Bildung der Umwandlungsüberzüge,
Wasserspülung.

Zur weiteren Verbesserung des so erhaltenen Umwandlungsüberzuges ist es üblich, eine Behandlung mit einer Nachbehandlungslösung anzuschliessen. Hierfür sind insbesondere Lösungen auf Chromatbasis gebräuchlich. Obgleich diese Form der Nachbehandlung durchaus wirksam ist, ist infolge der Toxizität der Chromatlösungen, die besondere Vorsichtsmassnahmen bei der Applikation erforderlich macht, und der Abwasserprobleme zunehmend eine Abkehr von derartigen Nachbehandlungslösungen erkennbar. Auch kann bei der Bildung von Umwandlungsüberzügen auf Behältermaterial für Lebensmittel und Getränke eine Beeinflussung des Behälterinhaltes nicht ausgeschlossen werden.

Auch ist es zur Nachbehandlung von Umwandlungsüberzügen bekannt, eine nicht zusammenhängende Dichtungsschicht eines hydrophobmachenden Mittels, z.B. unter Verwendung organischer Stoffe, etwa auf Basis Polyisocyanat modifizierter Harzkondensationsprodukte (DE-AS 1 147 820) zu erzeugen bzw. mit trocknenden Ölen oder niedrigviskosen Lacken abzudichten (H. Fortmann «Nachbehandlungsverfahren phosphatierter Eisenteile», Metallwaren-Industrie und Galvanotechnik MSV Nr. 6 (1943), Seite 229). Diese Mittel konnten sich jedoch gegenüber den chromhaltigen Nachbehandlungslösungen aus Gründen niederer Qualität nicht durchsetzen. Zudem führten zahlreiche dieser Mittel nicht zu brauchbaren Ergebnissen.

Weiterhin ist es bekannt, chemisch aufgebrachte Umwandlungsüberzüge, insbesondere Phosphatüberzüge, auf Metallen mittels Lösungen nachzubehandeln, die eine Poly-4-vinylphenolverbindung der Formel

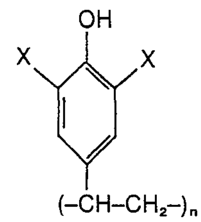

enthält. Hierbei sind

n eine Zahl zwischen 5 und 100,

x unabhängig voneinander Wasserstoff und/oder $CRR_1OH$-Gruppen mit R und $R_1$ = Wasserstoff, aliphatischem und/oder aromatischem Rest mit 1 bis 12 Kohlenstoffatomen (DE-OS 3 146 265).

Der pH-Wert der zum Einsatz kommenden Lösung liegt üblicherweise im alkalischen Bereich, was bei der Behandlung von mit Umwandlungsüberzügen versehenen Metalloberflächen gegebenenfalls mit dem Nachteil einer teilweisen Schichtablösung verbunden sein kann.

Aufgabe der Erfindung ist, ein Verfahren bereitzustellen, das mit keinerlei Umwelt- oder Applikationsproblemen behaftet ist, dennoch insbesondere zu korrosionsfesten und die Lackhaftung verbessernden Überzügen führt und insbesondere auch universell einsetzbar ist.

Die Aufgabe wird gelöst, indem das Verfahren der eingangs genannten Art entsprechend der Erfindung derart ausgestaltet wird, dass die Polymerlösung oder -dispersion ein Polymer der Formel

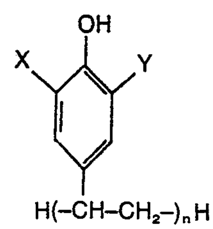

bzw. ein saures Salz hiervon enthält, wobei bedeuten:

n = 2 bis zu einer Zahl, die noch Wasserlöslichkeit oder -dispergierbarkeit gewährleistet,

X = Wasserstoff oder Z

Z = 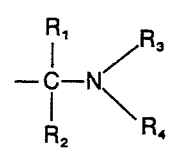

Y = Wasserstoff, Z, $CR_5R_6OR_7$ oder $CH_2Cl$ und $R_1$ bis $R_7$ Wasserstoff, Alkyl, Aryl, Hydroxyalkyl, Aminoalkyl, Mercaptoalkyl oder Phosphoalkyl mit einer Alkylgruppenlänge, die noch Wasserlöslichkeit oder -dispergierbarkeit gewährleistet,

und wobei der Anteil von Z mindestens 0,1 Z-Gruppen pro Monomereinheit beträgt.

Das erfindungsgemässe Verfahren ist zur Behandlung von nicht vorbehandelten Metalloberflächen, einschl. Aluminium und Zink, geeignet. Insbesondere ist es zur Behandlung von Metalloberflächen bestimmt, die bereits einen Umwandlungsüberzug aufweisen. In beiden Fällen werden Korrosionsschutz und Lackhaftung verbessert

bzw. gegebenenfalls zusätzlich verbessert. Das Verfahren stellt mithin eine echte Alternative zur Behandlung mit Lösungen dar, die Chrom-VIionen enthalten und zur Behandlung von sowohl metallischen Oberflächen wie auch von mit Umwandlungsüberzügen versehenen Metalloberflächen Anwendung finden können. Ein typischer Arbeitsablauf, in den das erfindungsgemässe Verfahren integriert werden kann, sieht vor,

1. die Metalloberflächen auf chemische oder physikalische Weise von Fett und Schmutz zu befreien,
2. zu spülen und
3. mit dem erfindungsgemässen Verfahren zu behandeln oder aber nach der Spülstufe gemäss 2,
3. einen Umwandlungsüberzug zu erzeugen,
4. zu spülen und
5. das erfindungsgemässe Verfahren anzuwenden.

Das erfindungsgemässe Verfahren ist zur Behandlung einer Vielzahl von Metalloberflächen geeignet. Beispiele sind Zink, Eisen, Aluminium und kaltgewalzter, geätzter, gebeizter und heissgewalzter Stahl, gegebenenfalls mit einem zuvor aufgebrachten Umwandlungsüberzug.

Die im erfindungsgemässen Verfahren zum Einsatz kommende Lösung oder Dispersion kann ein Polymer mit unterschiedlichen Monomereinheiten enthalten. Beispielsweise kann das Polymer die allgemeine Formel

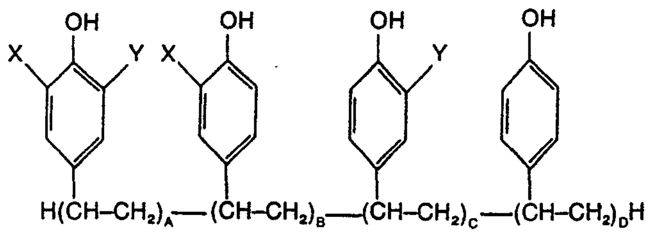

besitzen. X und Y haben hierbei die oben gegebene Definition. A, B, C und D können jeweils von 0 bis zu einer Zahl reichen, bei der das Polymer unter den Anwendungsbedingungen unlöslich bzw. nicht dispergierbar ist, jedoch muss die Summe von A, B, C und D wenigstens 2 sein.

Der Anteil der Z-Gruppe mit der obengenannten Definition muss so hoch sein, dass nach Neutralisation mit einer Säure das Polymer wasserlöslich oder wasserdispergierbar ist. Der hierfür erforderliche Anteil der Z-Gruppe hängt vom Molekulargewicht des Polymers wie von der Beschaffenheit der Alkylgruppen ($R_1$ bis $R_7$) im Polymer ab. Der Anteil muss jedoch mindestens 0,1 Z-Gruppen pro Monomereinheit betragen.

Gemäss einer bevorzugten Ausgestaltung der Erfindung bringt man die gegebenenfalls mit einem chemischen Umwandlungsüberzug versehenen Metalloberflächen mit einer Polymerlösung oder -dispersion in Berührung, deren Polymer 0,5 bis 1,5 Z-Gruppen pro Monomereinheit enthält.

Das bei erfindungsgemässen Verfahren zum Einsatz kommende Polymer kann vorzugsweise aus Poly-4-vinylphenol nach der Mannich-Reaktion hergestellt werden. Hierzu wird es mit Formaldehyd und sekundärem Amin umgesetzt. Das Umsetzungsprodukt wird dann für den erfindungsgemässen Einsatz mit organischer oder anorganischer Säure in wasserlösliche oder wasserdispergierbare Form überführt.

Das Molekulargewicht des für die Umsetzung einzusetzenden Poly-4-vinylphenols kann sich von dem des Monomers, gewöhnlich jedoch von dem des niederen Oligomeres mit 360 bis zu dem des Hochpolymers mit etwa 30 000 und mehr bewegen. Die obere Grenze des Molekulargewichts ist letztlich durch die Wasserlöslichkeit bzw. -dispergierbarkeit des entstehenden Umsetzungsproduktes bestimmt.

Im allgemeinen hat das im erfindungsgemässen Verfahren zum Einsatz kommende Polymer ein Molekulargewicht von bis 200 000, vorzugsweise von 700 bis 70 000, maximal 850, vorzugsweise 10 bis 300, Monomereinheiten und Alkylkettenlängen von 1 bis 18, vorzugsweise 1 bis 12 C-Atomen.

Die Verteilbarkeit des Polymers in Wasser kann durch organische und anorganische Säure unter Salzbildung mit der Aminogruppe herbeigeführt werden. Geeignete Säuren für diesen Zweck sind Essigsäure, Zitronensäure, Oxalsäure, Ascorbinsäure, Phenylphosphonsäure, Chlormethylphosphonsäure, Mono-, Di- oder Trichloressigsäure, Trifluoressigsäure, Salpetersäure, Phosphorsäure, Fluorwasserstoffsäure, Schwefelsäure, Borsäure, Chlorwasserstoffsäure, Hexafluorokieselsäure, Hexafluorotitansäure, Hexafluorozirkonsäure und ähnliche. Diese Säuren können allein oder in beliebiger Mischung eingesetzt werden. Nach unterstöchiometrischer, stöchiometrischer oder überstöchiometrischer Säurezugabe entsteht unter weiterem Zusatz die im erfindungsgemässen Verfahren einzusetzende Lösung oder Dispersion.

Für die Salzbildung besonders geeignete Aminogruppen sind

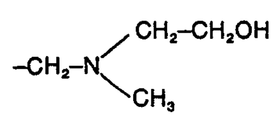

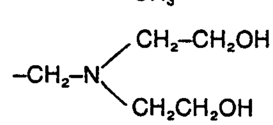

Demzufolge sieht eine weitere vorteilhafte Ausgestaltung der Erfindung vor, eine Polymerlösung oder -dispersion einzusetzen, deren Polymer für Z die Gruppierung

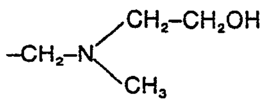

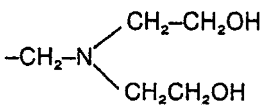

besitzt.

Die Polymerlösungen oder -dispersionen können einen in weiten Grenzen liegenden pH-Wert aufweisen. Sofern die Nachbehandlung von Metalloberflächen, die bereits einen chemischen Umwandlungsüberzug aufweisen, beabsichtigt ist, sieht eine bevorzugte Ausgestaltung der Erfindung vor, die mit einem chemischen Umwandlungsüberzug versehenen Metalloberflächen mit einer Polymerlösung oder -dispersion in Berührung zu bringen, deren pH-Wert 2,0 bis 8,0 beträgt.

Die Konzentration der wirksamen Komponente kann innerhalb eines breiten Bereiches liegen. Vorteilhaft ist es, Polymerlösungen oder -dispersionen zum Einsatz zu bringen, deren Polymergehalt 0,1 bis 50 g/l, vorzugsweise 1 bis 10 g/l, beträgt.

Zu Transport- oder Lagerungszwecken ist es vorteilhaft, ein Konzentrat zu formulieren, aus dem die zum Einsatz kommende Polymerlösung oder -dispersion hergestellt wird. Dessen Polymerkonzentration sollte 5 bis 30 Gew.-% betragen.

Die zu behandelnden, gegebenenfalls mit einem Umwandlungsüberzug versehenen Metalloberflächen können auf jede bekannte Weise mit der Polymerlösung oder -dispersion in Berührung gebracht werden. Beispielsweise kann die Applikation durch Spritzen, Tauchen oder Rollenauftrag erfolgen. Die Temperatur der Polymerlösung oder -dispersion ist weitgehend beliebig. Sie sollte zweckmässigerweise zwischen 21,1 und 71 °C liegen.

Nach der Aufbringung der Polymerlösung oder -dispersion kann gespült werden, obgleich auch ohne Spülung gute Ergebnisse erzielbar sind. Im Falle mancher Folgebehandlung, z.B. der Elektrotauchlackierung, ist jedoch eine Spülung vorzuziehen.

Anschliessend wird üblicherweise getrocknet. Die Trocknung kann z.B. durch Luftzirkulation oder im Ofen erfolgen. Obgleich auch Trocknung bei Raumtemperatur möglich ist, empfiehlt sich zur Abkürzung der Trocknungsdauer erhöhte Temperatur.

An die Trocknung kann sich eine Folgebehandlung, z.B. durch Lackieren, anschliessen. Die Lackierung kann durch Pinselauftrag, Spritzen, elektrostatische Verfahren, Tauchen, Rollenauftrag oder Elektrotauchverfahren erfolgen.

Das erfindungsgemässe Verfahren führt insbesondere zu einem verbesserten Korrosionsschutz der behandelten Metalloberfläche sowohl ohne als auch mit vorheriger Erzeugung eines Umwandlungsüberzuges und zu einer verbesserten Lackhaftung. Es ist insbesondere mit Vorteil auf die Nachbehandlung von mit einem Phosphatüberzug versehenen Metalloberflächen anwendbar. Derartige Phosphatüberzüge können Eisenphosphat-, Manganphosphat-, Zinkphosphat- oder mit Kalzium-, Nickel- oder Magnesiumionen modifizierte Zinkphosphatüberzüge sein.

Die Erfindung wird anhand der nachfolgenden Beispiele beispielsweise und näher erläutert.

Beispiele

Zur Vorbereitung der Versuche wurden zunächst 2 Polymere hergestellt.

a) In einen Reaktor aus rostfreiem Stahl, der mit einem Rührer, einer Stickstoffzuführung und einem Kühler ausgestattet war, wurden 45,4 kg Äthanol (95 Gew.-%) als Lösungsmittel gegeben. Der Reaktorinhalt wurde auf 50 °C erhitzt und mit 36,3 kg Poly-4-vinylphenol-Polymer mit einem Molekulargewicht von 5000 unter gutem Rühren versetzt. Nachdem das gesamte Polymer zugegeben worden war, wurde der Reaktor geschlossen und auf 80 °C erhitzt, um die Auflösung des Polymers zu unterstützen. Anschliessend erfolgte eine Abkühlung auf 40 °C und die Zugabe von 22,7 kg N-Methylaminoäthanol und von 45,4 kg entionisiertem Wasser. Danach wurden über einen Zeitraum von einer Stunde 24,54 kg einer Formaldehydlösung (37 Gew.-%) zugefügt, wobei die Temperatur auf 40 °C $\pm$ 2 °C konstantgehalten wurde. Der Reaktor wurde dann während 3 Stunden bei 40 °C gehalten. Danach erfolgte ein Zusatz von 143 kg Salpetersäure (10 Gew.-%) und die Einstellung auf einen Feststoffgehalt von 20 Gew.-% durch Zugabe von weiterem entionisiertem Wasser. Es resultierte eine stabile Polymerlösung.

b) Zu 100 g Glycolmonoäthyläther, die sich in einem mit Rührer, Kühler und Stickstoffzuführung versehenen Kolben befanden, wurden 80 g Poly-4-vinylphenol mit einem Molekulargewicht von 5000 gegeben und aufgelöst. Danach erfolgte die Zugabe von 700 g Diäthanolamin und 100 g entionisiertem Wasser. Der Kolben wurde dann auf 50 °C erwärmt und mit 108 g Formaldehydlösung (37 Gew.-%) während eines Zeitraumes von einer Stunde versetzt. Der Reaktorinhalt wurde weitere 3 Stunden bei 50 °C belassen und dann für weitere 3 Stunden auf 80 °C erhitzt. Die Reaktionsmischung wurde gekühlt und mit 65 g Phosphorsäure (75 Gew.-%) und 227 g entionisiertem Wasser versetzt. Das erhaltene Produkt bestand aus einer stabilen Lösung.

Kaltgewalzte Stahlbleche, die zum Korrosionsschutz während des Transports eingeölt waren, wurden zunächst mit Mineralöl und dann mit einer wässrigen Lösung eines stark alkalischen Reinigers gereinigt. Der alkalische Reiniger wurde im Spritzen bei einer Temperatur von 66 °C während eines Zeitraumes von 60 Sekunden appliziert.

Im Anschluss an die Reinigung wurde ein Eisenphosphatüberzug durch Behandlung in einer Alkaliphosphatlösung während 60 Sekunden bei 43 °C aufgebracht. Danach wurden die Bleche mit kaltem Leitungswasser während 30 Sekunden gespült und mit einer 0,5 Gew.-%igen Lösung der gemäss a) und b) hergestellten Polymere behandelt. Die Polymerbehandlung nahm 30 Sekunden

in Anspruch und wurde bei 43 °C im Spritzen durchgeführt. Anschliessend wurden die Bleche gespült und in einem Ofen bei 177 °C während 5 Minuten getrocknet.

Im Anschluss an die vorgenannte Behandlung wurden die Bleche mit einem Standardlack versehen und dem Salzsprühtest (gemäss ASTM B-117) für einen Zeitraum von 504 Stunden unterworfen. Die mit den Polymerlösungen gemäss a) und b) behandelten und anschliessend lackierten Bleche zeigten eine Korrosionsbeständigkeit, die der sonst üblichen Standardbehandlung mit Chromatlösung äquivalent war.

**Patentansprüche**

1. Verfahren zum Behandeln von gegebenenfalls mit einem chemischen Umwandlungsüberzug versehenen Metalloberflächen mittels einer organisches Polymer enthaltenden wässrigen Lösung oder Dispersion, dadurch gekennzeichnet, dass die Polymerlösung oder -dispersion ein Polymer der Formel

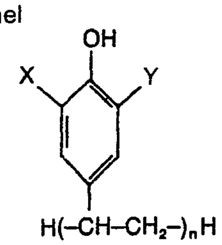

bzw. ein saures Salz hiervon enthält, wobei bedeuten:

n = 2 bis zu einer Zahl, die noch Wasserlöslichkeit oder -dispergierbarkeit gewährleistet,

X = Wasserstoff oder Z

Z = 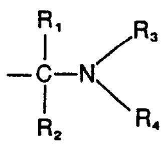

Y = Wasserstoff, Z, $CR_5R_6OR_7$ oder $CH_2Cl$ und $R_1$ bis $R_7$ Wasserstoff, Alkyl, Aryl, Hydroxyalkyl, Aminoalkyl, Mercaptoalkyl oder Phosphoalkyl mit einer Alkylgruppenlänge, die noch Wasserlöslichkeit oder -dispergierbarkeit gewährleistet, und wobei der Anteil von Z mindestens 0,1 Z-Gruppen pro Monomereinheit beträgt.

2. Verfahren nach Anspruch 1, dadurch gekennzeichnet, dass die Polymerlösung oder -dispersion ein Polymer mit 0,5 bis 1,5 Z-Gruppen pro Monomereinheit enthält.

3. Verfahren nach Anspruch 1 oder 2, dadurch gekennzeichnet, dass die Polymerlösung oder -dispersion als Polymer das Reaktionsprodukt von Poly-4-vinylphenol mit Formaldehyd und sekundärem Amin enthält.

4. Verfahren nach einem oder mehreren der Ansprüche 1 bis 3, dadurch gekennzeichnet, dass die Polymerlösung oder -dispersion ein Polymer mit maximal 850 Monomereinheiten (n = 850), vorzugsweise 10 bis 300 Monomereinheiten (n = 10 bis 300), und Alkylgruppenlängen von maximal 18 C-Atomen, vorzugsweise maximal 12 C-Atomen, enthält.

5. Verfahren nach einem oder mehreren der Ansprüche 1 bis 4, dadurch gekennzeichnet, dass die Polymerlösung oder -dispersion ein Polymer mit der Gruppierung

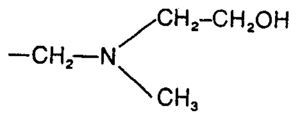

für Z enthält.

6. Verfahren nach einem oder mehreren der Ansprüche 1 bis 5, dadurch gekennzeichnet, dass die Polymerlösung oder -dispersion ein Polymer mit der Gruppierung

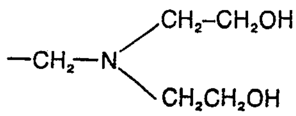

für Z enthält.

7. Verfahren nach einem oder mehreren der Ansprüche 1 bis 6, dadurch gekennzeichnet, dass man die mit einem chemischen Umwandlungsüberzug versehenen Metalloberflächen mit einer Polymerlösung oder -dispersion in Berührung bringt, deren pH-Wert 2,0 bis 8,0 beträgt.

8. Verfahren nach einem oder mehreren der Ansprüche 1 bis 7, dadurch gekennzeichnet, dass die Polymerlösung oder -dispersion einen Polymergehalt von 0,1 bis 50 g/l, vorzugsweise 1 bis 10 g/l, aufweist.

9. Anwendung des Verfahrens nach einem oder mehreren der Ansprüche 1 bis 8 auf die Nachbehandlung von mit einem Phosphatüberzug versehenen Metalloberflächen.

**Claims**

1. Process for treating metal surfaces, possibly furnished with a chemical conversion coating by means of an organic polymer containing aqueous solution or dispersion, characterized in that the solution or dispersion of the polymer contains a polymer of the formula

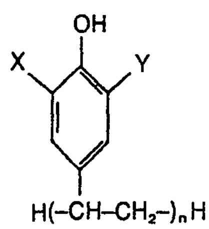

and an acidic salt thereof respectively, wherein

n = 2 up to a number, which guarantees solubility or dispersibility in water

X = hydrogen or Z

Z = 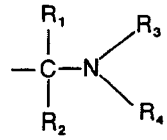

Y = hydrogen, Z, $CR_5R_6OR_7$ or $CH_2Cl$ and $R_1$ through $R_7$ hydrogen, alkyl, aryl, hydroxyalkyl, aminoalkyl, mercapto-alkyl or phosphoalkyl, the length of the alkyl groups be such, that solubility or dispersibility in water is guaranteed, and wherein the amount of Z is at least 0.1 Z-groups per monomer unit.

2. Process according to claim 1, characterized in that the solution or dispersion of the polymer contains a polymer having 0.5 to 1.5 Z-groups per monomer unit.

3. Process according to claim 1 or 2, characterized in that the solution or dispersion of the polymer contains a polymer which is the reaction product of poly-4-vinylphenol, formaldehyde and secondary amin.

4. Process according to claim 1, 2 or 3, characterized in that the solution or dispersion of the polymer contains a polymer having utmost 850 monomer units (n = 850), preferably 10 up to 300 monomer units (n = 10 up to 300) and a length of the alkyl groups of utmost 18 C-atoms, preferably utmost 12 C-atoms.

5. Process according to one or more of the claims 1 to 4, characterized in that the solution or dispersion of the polymer contains a polymer, wherein

Z = 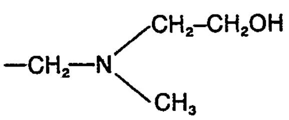

6. Process according to one or more of the claims 1 to 5, characterized in that the solution or dispersion of the polymer contains a polymer, wherein

Z = 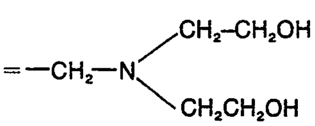

7. Process according to one or more of the claims 1 to 6, characterized in that metal surfaces furnished with a chemical conversion coating are brought in contact with a solution or dispersion of the polymer having a pH-value in the range of 2.0 to 8.0.

8. Process according to one or more of the claims 1 to 7, characterized in that the solution or dispersion of the polymer contains polymer in an amount of 0.1 up to 50 g/l, preferably of 1 up to 10 g/l.

9. Use of the process according to one or more of the claims 1 to 8 for the post-treatment of metal surfaces furnished with a phosphate coating.

**Revendications**

1. Procédé de traitement de surfaces métalliques éventuellement munies d'un revêtement de conversion chimique au moyen d'une solution ou dispersion aqueuse contenant un polymère organique, caractérisé en ce que la solution ou dispersion contient un polymère répondant à la formule:

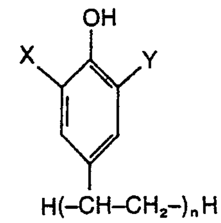

ou un de ses sels acides, formule dans laquelle:
n = 2 à un nombre qui garantit encore la solubilité ou la dispersibilité dans l'eau,
X = H ou Z,

Z = 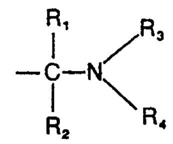

Y = H, Z, $CR_5R_6OR_7$ ou $CH_2Cl$ et $R_1$ à $R_7$ = H, un groupe alkyle, aryle, hydroxyalkyle, aminoalkyle, mercaptoalkyle ou phosphoalkyle ayant une longueur de groupe alkyle qui garantit encore la solubilité ou la dispersibilité dans l'eau, et dans laquelle la proportion de Z est d'au moins 0,1 groupe Z par motif monomère.

2. Procédé suivant la revendication 1, caractérisé en ce que la solution ou dispersion de polymère contient un polymère ayant 0,5 à 1,5 groupes Z par motif monomère.

3. Procédé suivant les revendications 1 ou 2, caractérisé en ce que la solution ou dispersion de polymère contient comme polymère le produit de la réaction du poly-4-vinylphénol avec le formaldéhyde et une amine secondaire.

4. Procédé suivant une ou plusieurs des revendications 1 à 3, caractérisé en ce que la solution ou dispersion de polymère contient un polymère ayant au maximum 850 motifs monomères ( n = 850), de préférence 10 à 300 motifs monomères (n = 10 à 300), et des longueurs de groupes alkyle de 18 atomes de C au maximum, de préférence de 12 actomes de C au maximum.

5. Procédé suivant une ou plusieurs des revendications 1 à 4, caractérisé en ce que la solution ou dispersion de polymère contient un polymère ayant le groupe

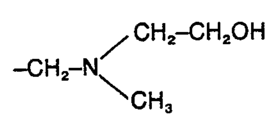

pour Z.

6. Procédé suivant une ou plusieurs des revendications 1 à 5, caractérisé en ce que la solution ou dispersion de polymère contient un polymère ayant le groupe

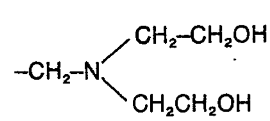

pour Z.

7. Procédé suivant une ou plusieurs des revendications 1 à 6, caractérisé en ce qu'on amène les surfaces métalliques munies d'un revêtement de conversion chimique en contact avec une solution ou dispersion de polymère dont le pH est de 2,0 à 8,0.

8. Procédé suivant une ou plusieurs des revendications 1 à 7, caractérisé en ce que la solution ou dispersion de polymère présente une teneur en polymère de 0,1 à 50 g/l, de préférence de 1 à 10 g/l.

9. Utilisation du procédé suivant une ou plusieurs des revendications 1 à 8 pour le post-traitement de surfaces métalliques munies d'un revêtement de phosphate.